# EUROPÄISCHE PATENTSCHRIFT

(11) **EP 2 188 546 B1**
(45) Veröffentlichungstag und Bekanntmachung des Hinweises auf die Patenterteilung: **21.11.2012**
(21) Anmeldenummer: 08785250.5
(22) Anmeldetag: 31.07.2008
(51) Int. Cl.: F16D 65/14, F16D 27/00

(54) **ELEKTROMAGNITISCH BETÄTIGBARE DREHMOMENTSTEUERVORRICHTUNG**
ELECTROMAGNETICALLY ACTIVATABLE TORQUE CONTROL DEVICE
DISPOSITIF DE COMMANDE DE COUPLE DE ROTATION À ACTIONNEMENT ÉLECTROMAGNÉTIQUE

(30) Priorität: 15.08.2007 DE 102007038689
(43) Veröffentlichungstag der Anmeldung: 26.05.2010
(73) Patentinhaber: SEW-EURODRIVE GmbH & Co. KG, 76646 Bruchsal (DE)
(72) Erfinder: SCHWESINGER, Klaus, 76646 Bruchsal (DE); BECKER, Günter, 76684 Östringen (DE); SCHMIDT, Josef, 76676 Graben-Neudorf (DE)
(74) Vertreter: Tüngler, Eberhard
(86) Internationale Anmeldenummer: PCT/EP2008/006308
(87) Internationale Veröffentlichungsnummer: WO 2009/021636

(56) Entgegenhaltungen:
- WO-A-2005/043715
- DE-B- 1 051 082
- US-A1- 2005 179 337

## Beschreibung

Die Erfindung betrifft eine elektromagnetisch betätigbare Drehmomentsteuervorrichtung.

Aus der DE 196 22 983 C1 ist eine elektromagnetisch betätigbare Bremse bekannt, die einen hohen elektrischen Leistungsbedarf aufweist.

Aus der US 2005/179337 A1 ist eine elektromagnetische betätigbare Drehmomentsteuervorrichtung gemäß Oberbegriff des vorliegenden Anspruchs 1 bekannt.

Der Erfindung liegt daher die Aufgabe zugrunde, den Energieverbrauch bei industriellen Anlagen zu senken.

Erfindungsgemäß wird die Aufgabe bei der Drehmomentsteuervorrichtung nach den in Anspruch 1 angegebenen Merkmalen gelöst.

Wichtige Merkmale der Erfindung bei der Drehmomentsteuervorrichtung sind, dass sie elektromagnetisch betätigbar ist, insbesondere als Bremse oder Kupplung realisierbar ist, und dass radial orientierte Elektromagnete vorgesehen sind, denen auf einer axial gegenüberliegenden Scheibe radial orientiert angeordnete Permanentmagnete gegenüber stehen,
wobei ein Mittel zur Umsetzung einer Drehbewegung der Scheibe in eine axiale Bewegung einer Druckscheibe vorgesehen ist,
wobei von der Druckscheibe eine mit einer Welle drehbare, in axialer Richtung verschiebbar angeordnete Reibscheibe auf ein Bremslagerschild drückbar ist, insbesondere abhängig von der axialen Position der Druckscheibe,
wobei ein Federelement derart vorgesehen ist, das der von der Magnetkraft der Elektromagnete bewirkbaren Drehbewegung entgegengerichtet wirkt.

Von Vorteil ist dabei, dass die Drehmomentsteuervorrichtung sehr kompakt ausgeführt ist, einen geringen Energieverbrauch aufweist, da Permanentmagnete verwendet werden und das Kupplungs- oder Bremsmoment, also das durch- oder abgeleitete Drehmoment steuerbar ist.

Bei einer vorteilhaften Ausgestaltung sind die zusätzlichen Permanentmagnete alle gleichartig ausgeführt.

Vorzugswiese ist auch die Stärke der Elektromagnete mit ihrem maximal erlaubten Bestromungswert derart ausgelegt, dass der Betrag der erreichbaren Magnetfeldstärke im Wesentlichen dem Betrag der Magnetfeldstärke eines der Permanentmagnets entspricht.

Bei einer vorteilhaften Ausgestaltung sind die Elektromagnete in einer axialen Ebene angeordnet. Von Vorteil ist dabei, dass sie auf einer Montagescheibe montierbar sind und somit die Fertigung und Verdrahtung einfach und mit geringem Aufwand ermöglicht ist.

Bei einer vorteilhaften Ausgestaltung ist das Federelement in Umfangsrichtung orientiert angeordnet, insbesondere als Spiralfeder ausgeführt ist. Von Vorteil ist dabei, dass eine mechanisch zuverlässige Rückstellung realisiert ist. Somit ist eine sichere Betriebsstrombremse oder Ruhestrombremse ausführbar.

Bei einer vorteilhaften Ausgestaltung weist die Reibscheibe eine Innenverzahnung, insbesondere Geradverzahnung, auf, die mit einer Mitnehmerverzahnung der Welle in Eingriff steht. Von Vorteil ist dabei, dass eine formschlüssige und somit sichere Drehmomentübertragung verwendbar ist. Auch bei kraftschlüssiger Verbindung würde die Erfindung ausführbar sein, wobei jedoch ein geringeres maximal erzeugbares Drehmoment übertragbar wäre.

Bei einer vorteilhaften Ausgestaltung ist die Reibscheibe beidseitig mit Bremsbelägen versehen. Von Vorteil ist dabei, dass an beiden Seiten eine Reibkraft erzeugbar ist.

Bei einer vorteilhaften Ausgestaltung ist das Bremslagerschild als Bremsscheibe ausgeführt, insbesondere ist deren axiale Position einstellbar vorgesehen. Von Vorteil ist dabei, dass die Montage einfach ist und statt eines festen Gehäuseteils ein axial einstellbares Teil verwendbar ist.

Bei einer vorteilhaften Ausgestaltung weist das Mittel zwei über eine schiefe Ebene zusammenwirkende Teile auf. Alternativ umfasst das Mittel eine Linearkugelrollspindel, ein ein Gewinde umfassendes Teil oder eine Schraube, insbesondere mit zumindest einem teilweisen oder ganzen Gewindegang. Von Vorteil ist dabei, dass eine Umsetzung der kleinen Drehbewegung der Permanentmagnete in der Größenordnung des Winkelabstandes zwischen Permanentmagnet und jeweils benachbartem Elektromagnet in eine axiale Bewegung ermöglicht ist und auf diese Welse die In Umfangsrichtung resultierende Magnetkraft in eine Axialkraft umsetzbar ist.

Bei einer vorteilhaften Ausgestaltung sind die Elektromagnete derart ausgeführt und bestrombar, dass die radiale Komponente des Magnetfeldes der Elektromagneten entgegengerichtet orientiert ist zur Magnetisierung der Permanentmagnete. Von Vorteil ist dabei, dass bei Bestromung der Elektromagneten die Permanentmagnete sehr schnell und mit großer Kraft in Umfangsrichtung gedreht werden bis sie jeweils eine Winkelstellung erreichen, die zwischen zwei zueinander benachbarten Elektromagneten liegt.

Bei einer vorteilhaften Ausgestaltung ist die Scheibe drehbar gegenüber der Anordnung der Elektromagneten. Von Vorteil ist dabei, dass die Elektromagneten mit dem Gehäuse fest verbindbar sind und von der Scheibe mittels Drehbewegung die Wirkung der Magnetkräfte an die Mittel zur Umsetzung in axiale Bewegung weiterleitbar ist.

Bei einer vorteilhaften Ausgestaltung ist eine Steuerung vorgesehen, insbesondere ist diese integriert ausgeführt. Außerdem sind elektronische Leistungshalbleiter zur Steuerung des Stromes der Wicklungen der Elektromagnete vorgesehen. Von Vorteil ist dabei, dass eine elektrisch einstellbares, steuerbares Bremsmoment vorsehbar ist. Bei Kupplungen wird entsprechend das übertragbare Drehmoment einstellbar.

Bei einer vorteilhaften Ausgestaltung sind Spannringe zur Einstellung der axialen Bewegbarkeit der Scheibe vorgesehen. Von Vorteil ist dabei, dass die axiale Bewegung mechanisch begrenzbar ist, insbesondere durch Anschlagen.

Bei einer vorteilhaften Ausgestaltung sind mit den Elektromagneten zusätzliche Permanentmagnete direkt oder indirekt fest verbunden sind, insbesondere zur Realisierung einer Ruhestrombremse. Von Vorteil ist dabei, dass eine Ruhestrombremse realisierbar ist. Hierbei werden die zusätzlichen, neben den Elektromagneten angeordneten Permanentmagneten bei Bestromung der Elektromagneten im Wesentlichen kompensiert und die auf der Scheibe vorgesehenen Permanentmagnete bleiben ohne Wirkung Bei Nicht-Bestromung treten die Permanentmagnete der Scheibe mit den zusätzlichen, neben den Elektromagneten angeordneten Permanentmagnete in Wirkverbindung, wobei wiederum die Magnetisierungsrichtung der beiden Sorten von Permanentmagnete in radialer Richtung entgegngesetzt orientiert ist. Somit wird wiederum eine Drehbewegung der Scheibe bewirkt, die zum Ziel hat, dass die zusätzlichen Permanentmagnete jeweils eine Winkelstellung erreichen zwischen zwei Permanentmagneten der Scheibe.

Vorzugsweise sind die Permanentmagnete der Scheibe alle gleich ausgeführt.

Weitere Vorteile ergeben sich aus den Unteransprüchen.

### Bezugszeichenliste

- 1: Einstellschraube
- 2: Scheibe
- 3: Bremsscheibe
- 4: Reibscheibe
- 5: Spannring
- 6: Permanentmagnete
- 7: Montagescheibe
- 8: Spulenkern
- 9: Elektromagnet
- 10: Mitnehmerverzahnung
- 11: Hohlrad
- 12: Druckscheibe
- 13: schiefe Ebene
- 14: Welle
- 15: Lager
- 16: Scheibe
- 17: Gehäuse
- 20: Rückholfeder

Die Erfindung wird nun anhand von Abbildungen näher erläutert:
Die Bremse ist an Wellen vorsehbar, beispielhaft an Rotorwellen von Elektromotoren oder an anderen Wellen von Antriebssystemen.

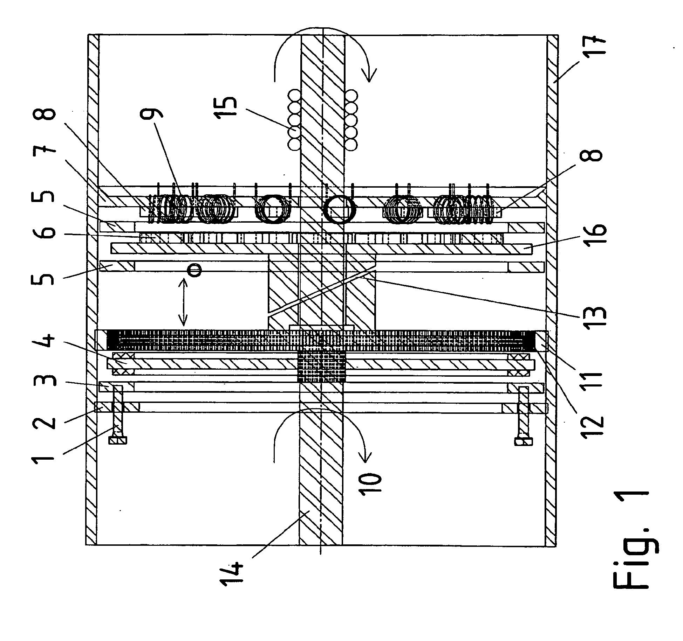

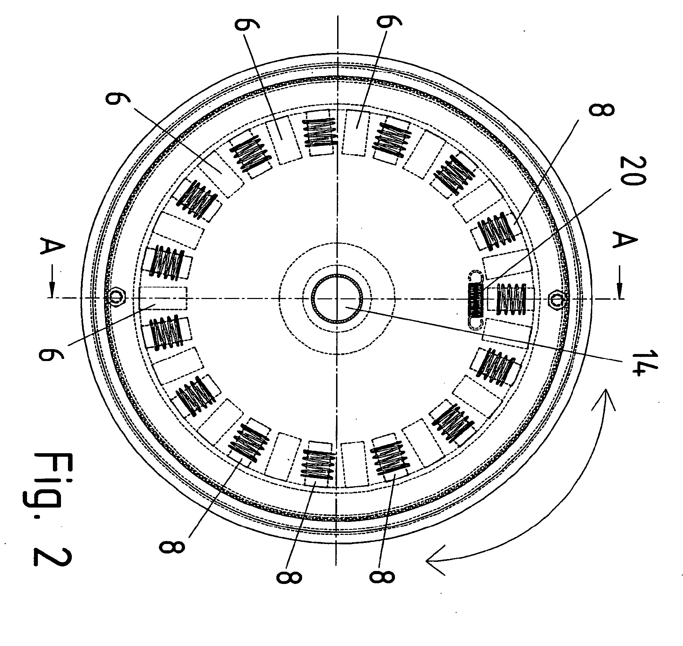

In der Figur 1 ist ein die Wellenachse enthaltender Querschnitt durch die Bremse und in Figur 2 ein Querschnitt, dessen Normale die Wellenachse aufweist, gezeigt.

Die Welle 14 ist auf Lagern 15 gegenüber dem Gehäuse 17 gelagert. Im Gehäuse 17 ist eine Schiebe 16 angebracht, auf der Elektromagnete befestigt sind. Diese sind derart orientiert, dass die Magnetisierungsrichtung in ihren Spulenkernen 8 im Wesentlichen in radialer Richtung ausgerichtet ist. In Figur 2 ist dies genauer gezeigt.

Mit einer Einstellschraube 1, welche in eine mit dem Gehäuse 17 fest verbundenen Scheibe 2 eingeschraubt ist, wird die axiale Position der ebenfalls relativ zum Gehäuse 17 nicht drehenden Bremsscheibe 3 eingestellt.

Die an axial beiden Seiten mit Reibbelägen versehene Reibscheibe 4 weist zur Welle hin eine Innenverzahnung auf, mit der sie im Eingriff steht mit der Mitnehmerverzahnung 10 der Welle 14. Somit ist die Reibscheibe 4 formschlüssig verbunden mit der Welle 14, aber axial verschiebbar angeordnet.

Eine Druckscheibe 12 ist an der axial anderen Seite der Reibscheibe 4 angeordnet. Diese Druckscheibe 12 ist ebenfalls axial verschiebbar angeordnet, wobei sie eine Außenverzahnung aufweist, die mit der Innenverzahnung eines Hohlrades 11 im Eingriff steht.

Die Druckscheibe 12 ist Ober ein eine schiefe Ebene 13 aufweisendes Teil mit der Scheibe 16 verbunden, auf der radial orientierte Permanentmagnete 6 angeordnet sind.

Die Anzahl und der gegenseitige Winkelabstand der Permanentmagnete 6 und der Elektromagnete ist gleich.

Bei Bestromung der Elektromagnete 9 richten sich die Permanentmagnete entsprechend dem Magnetfeld derart aus, dass eine radiale Position zwischen den Magneten anstreben, wenn die Magnetfeldrichtung der Elektromagneten 9 in radialer Richtung umgekehrt ist wie die Magnetisierungsrichtung der Permanentmagnete 6.

Somit verursachen die Permanentmagnete 6 eine Drehbewegung der Scheibe 16. Über die schiefe Ebene 13 wird diese Drehbewegung in eine axiale Verschiebung der Druckscheibe 12 übersetzt, die somit die drehbare Reibscheibe auf die Bremsscheibe drückt.

Im stromlosen Fall bewirkt die in Umfangsrichtung orientierte Rückstellfeder 20 eine Rückstellung der Scheibe 16 und somit ein Lüften der Bremse. Die Rückstellfeder 20 ist zwischen Scheibe 16 und Gehäuse 17 oder einem entsprechend verbundenen Teil wirksam.

Bei umgekehrter Stromrichtung statt des stromlosen Betriebs überwindet die Federkraft der Rückstellfeder 20 die von den Magnetfeldern bewirkten Kräfte und arbeitet in ähnlicher Weise, wie geschildert.

Die schiefe Ebene 13 hat eine Normalenrichtung, die schräg zur Achsrichtung vorgesehen ist. Vorteiligerweise weist der Winkel zwischen der Normalenrichtung und Achsrichtung einen Wert zwischen 0° und 90°, insbesondere zwischen 20° und 60° auf.

Mit den Spannringen 5 wird das axiale Spiel der Scheibe 16 und somit der Bereich der axialen Bewegung der Druckscheibe einstellbar.

Mit der Höhe des In die Wicklungen der Elektromagneten 9 eingeprägten Stromwertes wird auch die Bremskraft festgelegt. Somit ist die Bremskraft steuerbar.

Mit der Erfindung ist eine Betriebsstrombremse realisiert: Dabei wird die Bestromung der Elektromagneten derart wie oben geschildert ausgeführt, dass das Magnetfeld der Permanentmagnete entgegenwirkt zu den Magnetfeldern der Elektromagneten.

Bei einer anderen erfindungsgemäßen Ausführungsbeispiel ist eine Ruhestrombremse realisiert. Hierzu werden auf der Montagescheibe 7 statt nur der Elektromagnete, wie in Figur 1 und 2 gezeigt, auch Permanentmagnete montiert, deren Feld von den Elektromagneten im Wesentlichen neutralisierbar ist. Somit ist bei Bestromung nur die Federkraft wirksam. Bei Nicht-Bestromung wirken die Permanentmagnete der Scheibe 16 und diejenigen der Montagescheibe 7 zusammen und verursachen eine Drehbewegung, die wiederum zum Einfallen der Bremse bewirkt. Erst bei Bestromung wird die Bremse gelüftet mittels der durch die Rückstellfeder bewirkten Kraft.

Bei einer anderen erfindungsgemäßen Ausführungsbeispiel ist dasselbe Prinzip wie bei der beschriebenen Bremse für eine elektromagnetisch betätigbare Kupplung ausgeführt. Dabei ist das Gehäuse ein drehbar gelagertes Wellenteil.

## Patentansprüche

1. Elektromagnetisch betätigbare Drehmomentsteuervorrichtung, insbesondere Bremse oder Kupplung, wobei
**dadurch gekennzeichnet, dass**
radial orientierte Elektromagnete vorgesehen sind, denen auf einer axial gegenüberliegenden Scheibe (16) radial orientiert angeordnete Permanentmagnete (6) gegenüber stehen,
ein Mittel (13) zur Umsetzung einer Drehbewegung der Scheibe (16) in eine axiale Bewegung einer Druckscheibe (12) vorgesehen ist,
wobei von der Druckscheibe (12) eine mit einer Welle (14) drehbare, in axialer Richtung verschiebbar angeordnete Reibscheibe (4) auf ein Bremslagerschild (3) drückbar ist,
insbesondere abhängig von der axialen Position der Druckscheibe (12),
wobei ein Federelement (20) derart vorgesehen ist, das der von der Magnetkraft der Elektromagnete (9) bewirkbaren Drehbewegung entgegengerichtet wirkt.

2. Elektromagnetisch betätigbare Drehmomentsteuervorrichtung nach mindestens einem der vorangegangenen Ansprüche,
**dadurch gekennzeichnet, dass**
die Elektromagnete (9) in einer axialen Ebene angeordnet sind.

3. Elektromagnetisch betätigbare Drehmomentsteuervorrichtung nach mindestens einem der vorangegangenen Ansprüche,
**dadurch gekennzeichnet, dass**
das Federelement in Umfangsrichtung orientiert angeordnet ist, insbesondere als Spiralfeder ausgeführt ist.

4. Elektromagnetisch betätigbare Drehmomentsteuervorrichtung nach mindestens einem der vorangegangenen Ansprüche,
**dadurch gekennzeichnet, dass**
die Reibscheibe (4) eine Innenverzahnung, insbesondere Geradverzahnung, aufweist, die mit einer Mitnehmerverzahnung (10) der Welle (14) in Eingriff steht.

5. Elektromagnetisch betätigbare Drehmomentsteuervorrichtung nach mindestens einem der vorangegangenen Ansprüche,
**dadurch gekennzeichnet, dass**
die Reibscheibe (4) beidseitig mit Bremsbelägen versehen ist.

6. Elektromagnetisch betätigbare Drehmomentsteuervorrichtung nach mindestens einem der vorangegangenen Ansprüche,
**dadurch gekennzeichnet, dass**
das Bremslagerschild als Bremsscheibe (3) ausgeführt ist, insbesondere deren axiale Position einstellbar vorgesehen ist.

7. Elektromagnetisch betätigbare Drehmomentsteuervorrichtung nach mindestens einem der vorangegangenen Ansprüche,
**dadurch gekennzeichnet, dass**
das Mittel zwei über eine schiefe Ebene (13) zusammenwirkende Teile aufweist.

8. Elektromagnetisch betätigbare Drehmomentsteuervorrichtung nach mindestens einem der vorangegangenen Ansprüche,
**dadurch gekennzeichnet, dass**
das Mittel eine Linearkugelrollspindel, ein ein Gewinde umfassendes Teil oder eine Schraube umfasst, insbesondere mit zumindest einem teilweisen oder ganzen Gewindegang.

9. Elektromagnetisch betätigbare Drehmomentsteuervorrichtung nach mindestens einem der vorangegangenen Ansprüche,
**dadurch gekennzeichnet, dass**
die Elektromagnete derart ausgeführt und bestrombar sind, dass die radiale Komponente des Magnetfeldes der Elektromagneten (9) entgegengerichtet orientiert ist zur Magnetisierung der Permanentmagnete (6).

10. Elektromagnetisch betätigbare Drehmomentsteuervorrichtung nach mindestens einem der vorangegangenen Ansprüche,
**dadurch gekennzeichnet, dass**
die Scheibe (16) drehbar ist gegenüber der Anordnung der Elektromagneten (9).

11. Elektromagnetisch betätigbare Drehmomentsteuervorrichtung nach mindestens einem der vorangegangenen Ansprüche,
**dadurch gekennzeichnet, dass**
eine Steuerung vorgesehen ist, insbesondere integriert ist, wobei elektronische Leistungshalbleiter zur Steuerung des Stromes der Wicklungen der Elektromagnete (9) vorgesehen sind.

12. Elektromagnetisch betätigbare Drehmomentsteuervorrichtung nach mindestens einem der vorangegangenen Ansprüche,
dadurch gekenntzeichnet, dass
Spannringe (5) zur Einstellung der axialen Bewegbarkeit der Scheibe (16) vorgesehen sind.

13. Elektromagnetisch betätigbare Drehmomentsteuervorrichtung nach mindestens einem der vorangegangenen Ansprüche,
**dadurch gekennzeichnet, dass**
mit den Elektromagneten (9) zusätzliche Permanentmagnete (6) direkt oder indirekt fest verbunden sind, insbesondere zur Realisierung einer Ruhestrombremse.

## Claims

1. An electromagnetically actuatable torque control device, in particular brake or clutch, wherein
**characterised in that**
radially oriented electromagnets are provided, opposite which permanent magnets (6) arranged in radial orientation are located on an axially opposing disc (16),
a means (13) for converting a rotary movement of the disc (16) into an axial movement of a pressure disc (12) is provided,
with a friction disc (4) which can be rotated with a shaft (14) and is arranged displaceably in the axial direction being able to be pressed against a brake end shield (3) by the pressure disc (12), in particular dependent on the axial position of the pressure disc (12),
with a spring element (20) being provided [such] which acts in the opposite direction to the rotary movement which can be brought about by the magnetic force of the electromagnets (9).

2. An electromagnetically actuatable torque control device according to at least one of the preceding claims, **characterised in that** the electromagnets (9) are arranged in an axial plane.

3. An electromagnetically actuatable torque control device according to at least one of the preceding claims, **characterised in that** the spring element is arranged oriented in the peripheral direction, in particular is designed as a spiral spring.

4. An electromagnetically actuatable torque control device according to at least one of the preceding claims, **characterised in that** the friction disc (4) has a set of internal teeth, in particular spur toothing, which engages with a set of entraining teeth (10) of the shaft (14).

5. An electromagnetically actuatable torque control device according to at least one of the preceding claims, **characterised in that** the friction disc (4) is provided on both sides with brake linings.

6. An electromagnetically actuatable torque control device according to at least one of the preceding claims, **characterised in that** the brake end shield is designed as a brake disc (3), in particular the axial position thereof is provided to be adjustable.

7. An electromagnetically actuatable torque control device according to at least one of the preceding claims, **characterised in that** the means has two parts which cooperate over an inclined plane (13).

8. An electromagnetically actuarable torque control device according to at least one of the preceding claims, **characterised in that** the means comprises a linear ball screw spindle, a part comprising a thread, or a screw, in particular with at least a partial or entire thread.

9. An electromagnetically actuatable torque control device according to at least one of the preceding claims, **characterised in that** the electromagnets are formed and current can flow through them in such a way that the radial component of the magnetic field of the electromagnets (9) is oriented counter to the magnetisation of the permanent magnets (6).

10. An electromagnetically actuatable torque control device according to at least one of the preceding claims, **characterised in that** the disc (16) is rotatable relative to the arrangement of the electromagnets (9).

11. An electromagnetically actuatable torque control device according to at least one of the preceding claims, **characterised in that** a control means is provided, is particular integrated, with electronic power semiconductors for controlling the current of the windings of the electromagnets (9) being provided.

12. An electromagnetically actuatable torque control device according to at least one of the preceding claims, **characterised in that** clamping rings (5) for setting the axial movability of the disc (16) are provided.

13. An electromagnetically actuatable torque control device according to at least one of the preceding claims, **characterised in that** additional permanent magnets (6) are connected securely, directly or indirectly, to the electromagnets (9), in particular in order to produce a failsafe brake.

## Revendications

1. Dispositif de commande de couple à actionnement électromagnétique, en particulier frein ou embrayage, dans lequel sont prévus des électroaimants orientés radialement en face desquels sont disposés des aimants permanents (6) orientés radialement sur un disque (16) opposé axialement,
**caractérisé en ce que**
un moyen (13) pour convertir un mouvement de rotation du disque (16) en un mouvement axial d'un disque de pression (12) est prévu,
le disque de pression (12) peut presser un disque de friction (14) mobile en rotation avec un arbre (14), disposé de manière à pouvoir coulisser en direction axiale, contre un flasque de frein (3), en particulier en fonction de la position axiale du disque de pression (12),
un élément à ressort (20) étant prévu, qui agit en sens inverse du mouvement de rotation pouvant être généré par la force magnétique des électroaimants (9).

2. Dispositif de commande de couple à actionnement électromagnétique selon au moins une des revendications précédentes,
**caractérisé en ce que**
les électroaimants (9) sont disposés dans un plan axial.

3. Dispositif de commande de couple à actionnement électromagnétique selon au moins une des revendications précédentes,
**caractérisé en ce que**
l'élément à ressort est orienté en direction circonférentielle, en particulier réalisé sous la forme d'un ressort spiral.

4. Dispositif de commande de couple à actionnement électromagnétique selon au moins une des revendications précédentes,
**caractérisé en ce que**
le disque de friction (4) présente une denture intérieure, en particulier une denture droite, qui est en prise avec une denture d'entraînement (10) de l'arbre (14).

5. Dispositif de commande de couple à actionnement électromagnétique selon au moins une des revendications précédentes,
**caractérisé en ce que**
le disque de friction (4) est pourvu de garnitures de frein des deux côtés.

6. Dispositif de commande de couple à actionnement électromagnétique selon au moins une des revendications précédentes,
**caractérisé en ce que**
le flasque de frein est réalisé sous la forme d'un disque de frein (3), en particulier dont la position axiale est prévue réglable.

7. Dispositif de commande de couple à actionnement électromagnétique selon au moins une des revendications précédentes,
**caractérisé en ce que**
le moyen présente deux parties qui coopèrent par l'intermédiaire d'un plan incliné (13).

8. Dispositif de commande de couple à actionnement électromagnétique selon au moins une des revendications précédentes,
**caractérisé en ce que**
le moyen comprend une vis à billes linéaire, une pièce comprenant un filetage ou une vis, en particulier avec au moins un pas de vis partiel ou total.

9. Dispositif de commande de couple à actionnement électromagnétique selon au moins une des revendications précédentes,
**caractérisé en ce que**
les électroaimants sont réalisés et peuvent être alimentés de telle manière que la composante radicale du champ magnétique des électroaimants (9) soit orientée en sens inverse par rapport à la magnétisation des aimants permanents (6).

10. Dispositif de commande de couple à actionnement électromagnétique selon au moins une des revendications précédentes,
**caractérisé en ce que**
le disque (16) peut tourner par rapport à l'agencement des électroaimants (9).

11. Dispositif de commande de couple à actionnement électromagnétique selon au moins une des revendications précédentes,
**caractérisé en ce que**
une commande est prévue, en particulier intégrée, des semi-conducteurs de puissance électroniques pour commander le courant des enroulements des électroaimants (9) étant prévus.

12. Dispositif de commande de couple à actionnement électromagnétique selon au moins une des revendications précédentes,
**caractérisé en ce que**
des anneaux tendeurs (5) pour régler la mobilité axiale du disque (16) sont prévus.

13. Dispositif de commande de couple à actionnement électromagnétique selon au moins une des revendications précédentes,
**caractérisé en ce que**
des aimants permanents (6) supplémentaires sont directement ou indirectement solidaires des électroaimants (9), en particulier pour réaliser un frein à courant de repos.
